**Europäisches Patentamt**

**European Patent Office**

**Office européen des brevets**

(11) Veröffentlichungsnummer: **0 435 172 A1**

## (12) EUROPÄISCHE PATENTANMELDUNG

(21) Anmeldenummer: 90124952.4

(22) Anmeldetag: 20.12.90

(51) Int. Cl.⁵: **F16L 5/02**, H02G 3/08

(30) Priorität: 23.12.89 DE 3942780

(43) Veröffentlichungstag der Anmeldung:
03.07.91 Patentblatt 91/27

(84) Benannte Vertragsstaaten:
**AT BE CH DE ES FR GB IT LI**

(71) Anmelder: **DEERE & COMPANY**
**1 John Deere Road**
**Moline, Illinois 61265(US)**

(72) Erfinder: **Teich, Michael, Dipl.-Ing. (FH)**
**August-Bebel-Strasse 91**
**W-6800 Mannheim 24(DE)**
Erfinder: **Wiedehage, Horst, Dipl.-Ing. (FH)**
**Lüderitzstrasse 44-46**
**W-6800 Mannheim 81(DE)**

(74) Vertreter: **Feldmann, Bernhard et al**
**DEERE & COMPANY European Office Patent**
**Department Steubenstrasse 36-42**
**W-6800 Mannheim 1(DE)**

(54) **Leitungsdurchgang und Steckteil.**

(57) Bei einem Leitungsdurchgang für eine Wandung mit Abschlußkante (32), insbesondere für eine Kabinenheckwandung (30) eines Fahrzeuges (10) mit einer durch eine Heckklappe (24) verschließbaren Öffnung, weist die Wandung (30) eine zur Abschlußkante (32) hin offene, vorzugsweise U-förmige Ausnehmung (34) auf. Die Ausnehmung (34) ist durch ein einfügbares Steckteil (36), welches in seinem mittleren Bereich wenigstens eine Durchtrittsöffnung (38) für wenigstens eine Leitung (40) enthält, dichtend verschließbar. Die Oberflächen des Steckteiles (36) sind so geformt, daß sie im eingesteckten Zustand nicht über die Außenkontur der Wandung (30) überstehen. Zum Einstecken des Steckteiles (36) in die Ausnehmung (34) weisen Steckteil (36) und Ausnehmung (34) Führungsmittel, beispielsweise in Form von Führungssteg (48) und Nut (44), auf. Die Durchtrittsöffnung (38) für die Leitung (40) ist durch eine Haut (50) überspannt, die entsprechend dem Leitungsquerschnitt ausschneidbar ist.

FIG. 3

EP 0 435 172 A1

## LEITUNGSDURCHGANG UND STECKTEIL

Die Erfindung betrifft einen Leitungsdurchgang für eine Wandung mit Abschlußkante. Bei der Wandung handelt es sich insbesondere um eine Kabinenheckwandung eines Fahrzeuges, z. B. eines Ackerschleppers, welche eine durch eine Heckklappe, beispielsweise eine hochschwenkbare Heckscheibe, verschließbare Öffnung aufweist.

Es sind Fahrzeuge bekannt, an die durch mechanische Kupplungen Anbaugeräte und dergleichen angehängt werden können. Neben der mechanischen Verbindung sind weitere Verbindungen zwischen dem Fahrzeug und dem Anbaugerät herstellbar, die der Kontrolle und Steuerung des Anbaugerätes vom Fahrzeug aus dienen. Beispielsweise kann an einen Ackerschlepper eine Rundballenpresse angehängt werden. Die Steuerung und Überwachung dieser Rundballenpresse kann über in Kabeln zusammengefaßte elektrische Leitungen oder auch über hydraulische Leitungen von der Schlepperkabine aus erfolgen.

Hierbei werden die Leitungen von außen in das Kabineninnere geführt und an die in der Schlepperkabine befestigten Steuer- und Überwachungsinstrumente angeschlossen. Das Verlegen der Leitungen bereitet bei offenen Kabinen grundsätzlich keine Schwierigkeiten. Bei geschlossenen Kabinen müssen die Leitungen jedoch durch eine Öffnung geführt werden. Hierzu kann beispielsweise ein Fenster geöffnet werden, wodurch jedoch das Kabineninnere nicht mehr hermetisch nach außen abgeschlossen ist, so daß Staub und dergleichen eindringen und ein Temperaturaustausch stattfinden kann.

Für eine Leitungsdurchführung in das Fahrzeugkabineninnere ohne Beeinträchtigung der Kabinenabdichtung können beispielsweise in der Kabinenwandung befestigte Steckdosen dienen. Dies erfordert neben der Installation der Steckdosen eine feste Kabelverlegung im Kabineninneren. Ferner sind derartige Steckdosen nicht für beliebige Anwendungsfälle geeignet und erfordern eine Normung etc.

Die mit der Erfindung zu lösende Aufgabe wird darin gesehen, einen Leitungsdurchgang anzugeben, der eine rasche Verlegung einer Leitung bei Überwindung einer Wandung zuläßt, wobei der Leitungsdurchtritt in der Nähe einer Abschlußkante der Wandung liegt. Die Verwendung aufwendiger Durchführungsarmaturen soll entbehrlich sein.

Die Aufgabe wird erfindungsgemäß bei einer Wandung mit Abschlußkante dadurch gelöst, daß die Wandung eine zur Abschlußkante hin offene, vorzugsweise U-förmige Ausnehmung aufweist und die Ausnehmung durch ein einfügbares Steckteil, welches in seinem mittleren Bereich wenigstens eine Durchtrittsöffnung für wenigstens eine Leitung enthält, verschließbar ist.

Die Außenkontur des Steckteiles entspricht zweckmäßigerweise dem Ausschnitt der Ausnehmung, so daß das Steckteil dichtend in die Ausnehmung einfügbar ist. Hierdurch soll insbesondere ein Luftaustausch zwischen der Fahrzeugkabine und dem Außenraum unterbunden werden.

Bei den Leitungen handelt es sich vorzugsweise um elektrische Kabel, z. B. Kontroll- und Steuerleitungen, die zu verschiedenen an das Fahrzeug anhängbaren Anbaugeräten führen.

Einer wesentlichen Weiterbildung der Erfindung zufolge schließt die Oberfläche des Steckteiles wenigstens auf einer Seite mit der Oberfläche der Wandung bündig ab. Diese Ausgestaltung ist insbesondere bei solchen Wandungen vorteilhaft, die eine durch eine Klappe, z. B. die ausstellbare Heckscheibe eines Ackerschleppers, verschließbare Öffnung, in die die Ausnehmung mündet, aufweisen. Der Randbereich der geschlossenen Klappe überlappt sich hierbei mit dem die Öffnung begrenzenden Randbereich der Wandungsoberfläche und verschließt dichtend die Öffnung. Da das Steckteil sich nicht über die Oberfläche der Wandung erhebt, sondern mit dieser bündig abschließt, kommt auch im Bereich des Steckteiles die Klappe dichtend zur Anlage. Dies ermöglicht ein dichtes Verschließen der Öffnung, da die Dichtfläche, auf der die Klappe zur Anlage kommt, eine Ebene bildet.

Eine einfache und rasche Montage des Steckteiles in der Ausnehmung läßt sich vorzugsweise dadurch realisieren, daß die Ausnehmung und das Steckteil in ihren einander zugewandten Bereichen Führungsmittel aufweisen, die ein Einschieben des Steckteiles in die Ausnehmung von der Abschlußkante aus ermöglichen. Hierbei ist es zweckmäßig, wenn die Ausnehmung einen Führungssteg und das Steckteil eine entsprechende Nut aufweisen, wie es in der Zeichnung dargestellt ist. Es ist jedoch auch eine Lösung möglich, bei der die Nut in die Wandung eingelassen wird und der Führungssteg einen umlaufenden Steg aufweist.

Vorzugsweise entspricht der Querschnitt der das Steckteil durchdringenden Durchtrittsöffnung dem Querschnitt der hindurchgeführten Leitungen. Ist die Durchtrittsöffnung jedoch größer, so kann durch geeignete Abdichtmittel eine Abdichtung erfolgen, so daß kein Luftaustausch durch die Durchtrittsöffnung erfolgen kann.

Einer weiteren bevorzugten Weiterbildung der Erfindung zufolge ist die Durchtrittsöffnung durch eine ausschneidbare Haut überspannt. Diese Haut kann beispielsweise eine Dicke von 1 mm aufweisen. Sie läßt sich entsprechend dem Kabelquerschnitt ausschneiden. Die Haut befindet sich vorzugsweise an der nach außen weisenden Seite des Steckteiles.

Ferner enthält das Steckteil vorzugsweise eine die Durchtrittsöffnung mit seiner Außenkontur verbindende Trennaht. Dies ermöglicht ein seitliches Aufstecken des flexiblen Steckteiles über das jeweilige Kabel, ohne daß das Kabel durch die Durchtrittsöffnung gefädelt werden muß. Die Trennaht befindet sich vorzugsweise auf der der Abschlußkante gegenüberliegenden Seite des Steckteiles.

Da das Steckteil als preisgünstiges Bauteil ausgebildet werden kann, ist es von besonderem Vorteil, wenn das Steckteil so ausgebildet ist, daß es bei Entfernen der Leitung an dieser verbleiben kann. Für jede Leitung bzw. für jedes Leitungsbündel, das wahlweise durch die Ausnehmung in der Wandung verlegt werden soll, wird also je ein gesondertes Steckteil verwendet, das mit der Leitung an dem zugehörigen Anbaugerät verbleibt.

Für den Fall, daß keine Leitung durch die Ausnehmung in der Wandung verlegt werden soll, ist es zweckmäßig, ein Steckteil (Blindsteckteil) vorzusehen, das die Ausnehmung dichtend abschließt und keine Durchtrittsöffnung für Leitungen aufweist. Im Falle einer durch eine Haut überspannten Durchtrittsöffnung wird die Haut nicht aufgeschnitten.

Das Steckteil besteht vorzugsweise aus einem plastischen Material, zweckmäßigerweise aus Gummi.

Die Erfindung betrifft ferner ein Steckteil, welches so ausgebildet ist, daß es zur Verwendung bei einem erfindungsgemäßen Leitungsdurchgang geeignet ist.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1    die schematische Rückansicht eines Ackerschleppers mit einer ausstellbaren Heckscheibe und zwei Leitungsdurchgängen in der Kabinenheckwandung,

Fig. 2    eine perspektivische Teilansicht der Kabinenheckwandung mit einer U-förmigen Ausnehmung,

Fig. 3    ein erfindungsgemäßes Steckteil in perspektivischer Darstellung,

Fig. 4    die Aufsicht eines Steckteiles gemäß Fig. 3 und

Fig. 5    den Querschnitt durch einen erfindungsgemäßen Leitungsdurchgang.

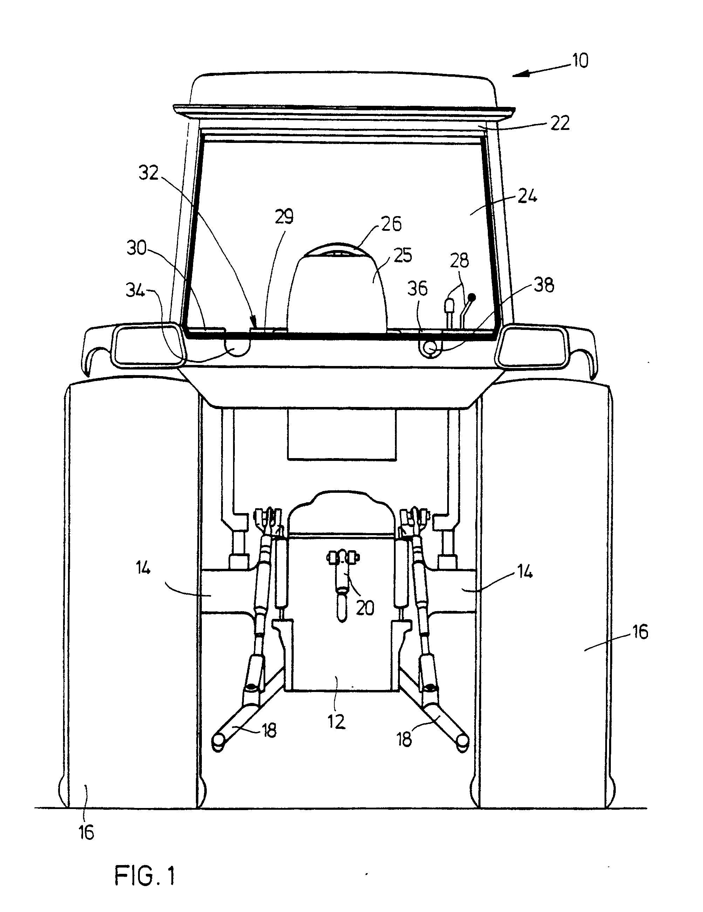

In der aus Fig. 1 ersichtlichen Rückansicht eines Ackerschleppers 10 sind das Getriebegehäuse 12, die beiden Achstrichter 14 und die Hinterräder 16 angedeutet. Am Getriebegehäuse 12 sind zwei Unterlenker 18 und ein Oberlenker 20 befestigt, die dem Anhängen von Anbaugeräten, beispielsweise einer Rundballenpresse, dienen. Über dem Getriebe 12 befindet sich eine geschlossene Kabine 22 mit einer nach hinten ausstellbaren Heckscheibe 24. Die Heckscheibenschwenkachse verläuft horizontal im Kabinendachrahmen. Durch die Heckscheibe hindurch sind der Fahrersitz 25, ein Teil des Lenkrades 26 und Bedienungshebel 28 erkennbar.

Die Heckscheibe 24 schlägt in geschlossenem Zustand mit ihrem unteren Randbereich von außen gegen die Kabinenheckwandung 30 an. Zwischen Kabinenheckwandung 30 und Heckscheibe 24 kann eine Dichtung 29 verlaufen, die an Hand Fig. 5 noch näher beschrieben werden wird. Durch die Dichtungsmittel läßt sich die Heckscheibe 24 luftdicht verschließen.

Von der oberen Abschlußkante 32 der Kabinenheckwandung 30 erstrecken sich in letzterer zwei nach unten gerichtete U-förmige Ausnehmungen 34, die so tief gezogen sind, daß sie nicht mehr vollständig durch die geschlossene Heckscheibe 24 abgedeckt werden. Diese Ausnehmungen dienen dem Durchtritt von Leitungen, die vom Kabineninneren zu dem jeweiligen Anbaugerät verlaufen und der Überwachung und Steuerung des Anbaugerätes vom Kabineninneren aus dienen. Wird das Anbaugerät abgehängt, so werden die Leitungen im Kabineninneren gelöst und aus den Ausnehmungen 34 genommen, wobei die Heckscheibe 24 zu öffnen ist.

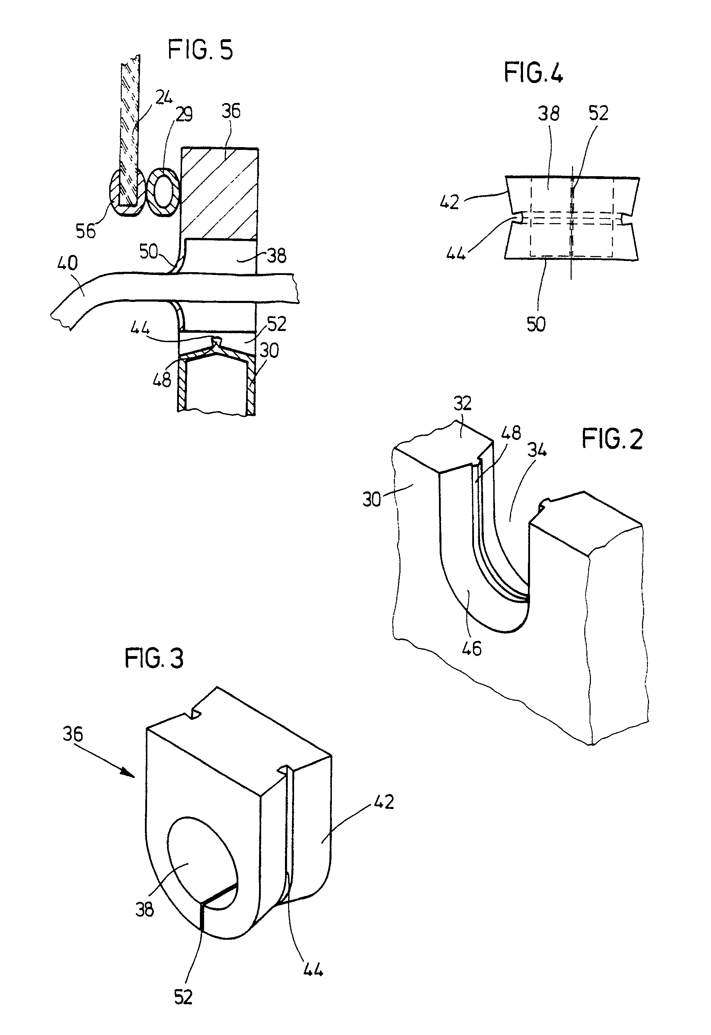

Während, wie aus Fig. 1 ersichtlich, die linke Ausnehmung frei ist, ist in die rechte Ausnehmung ein erfindungsgemäßes Steckteil 36 eingefügt. Bei dem in den Figuren 3 und 4 näher dargestellten Steckteil 36 handelt es sich um einen im wesentlichen U-förmigen Körper, dessen Umrandung der Ausnehmung 34 in der Kabinenheckwandung 30 angepaßt und in diese dichtend einfügbar ist. Nach oben hin ist das Steckteil 36 abgeflacht und schließt bündig mit der Abschlußkante 32 der Kabinenheckwandung 30 ab. In seinem mittleren Bereich enthält das Steckteil eine kreisrunde Durchtrittsöffnung 38, die der Aufnahme und dem Durchtritt der Leitung 40, welche z. B. ein Kabelstrang sein kann, dient.

Die Umfangsfläche 42 des Steckteiles 36 ist gemäß einer vorteilhaften Ausgestaltung der Erfindung keilförmig ausgebildet, so daß der mittlere Querschnitt des Steckteiles 36 kleiner ist als sein Querschnitt an der vorderen und hinteren Oberfläche. In dem mittleren Bereich der Umfangsfläche 42 läuft eine Nut 44 um. Die Durchtrittsfläche 46 der Ausnehmung 34 in der Kabinenheckwandung 30 ist entsprechend keilförmig ausgebildet und enthält einen Führungssteg 48. Diese Ausführung ermöglicht ein Einführen und Verschieben des Steckteiles 36 von oben in die Ausnehmung 34, wodurch die Ausnehmung sich dichtend verschließen läßt.

Angrenzend an die nach außen weisende Oberfläche des Steckteiles 36 ist die Durchtrittsöffnung 38 durch eine Haut 50 überspannt und zunächst verschlossen. Die Haut 50 ist beispielsweise ca. 1 mm dick und läßt sich mühelos ausschneiden. Der Ausschnitt wird so vorgenommen, daß die Leitung 40, die in der Regel nicht den ganzen Querschnitt der Durchtrittsöffnung 38 ausfüllt, gerade noch hindurchgeführt werden kann und mit der Haut 50 einen dichtenden Abschluß bildet.

Ferner weist das Steckteil 36 in seinem unteren Bereich, d. h. als gegenüberliegend zur abgeflachten Seite, eine Trennaht 52 auf, welche sich zwischen der Durchtrittsöffnung 38 und der Umfangsfläche 42 des Steckteiles 36 erstreckt. Bei eingestecktem Steckteil 36 werden die beiden Trennahtflächen aufeinander gedrückt, so daß durch die Trennaht 52 kein Luftaustausch stattfinden kann. Bei nicht eingestecktem Steckteil 36 läßt die Elastizität des Steckteiles 36 eine Aufweitung der Trennaht zu, so daß das Steckteil 36 über ein Kabel 40 geschoben werden kann und das Kabel 40 von der Durchtrittsöffnung 38 aufgenommen wird. Dies ist insbesondere dann vorteilhaft, wenn an den freien Enden des Kabels jeweils Geräte oder Stecker montiert sind, die sich nicht durch die Durchtrittsöffnung 38 hindurchstecken lassen.

Aus Fig. 5 geht eine Schnittdarstellung des Steckteiles 36 mit den angrenzenden Bereichen der Kabinenheckwandung 30 und der Heckscheibe 24 hervor. Es ist ersichtlich, daß die äußere Kontur des Steckteiles 36 (Keilform und Nut) sich der entsprechenden Kontur der Ausnehmung anpaßt. Ferner ist die Haut 50 des Steckteiles 36 erkennbar, die durch die Leitung 40 nach außen ausgeweitet ist und sich eng an das Kabel 40 anschmiegt. Am oberen Bereich des Steckteiles 36 liegt von außen die Dichtung 29 an, die als an der Kabinenheckwandung 30 anliegende umlaufende Dichtung die Heckscheibe 24 abdichtet. An der Dichtung 29 liegt der Randbereich der Heckscheibe 24, welcher einen Dichtungswulst 56 trägt, an.

Soll durch die Ausnehmung 34 in der Kabinenheckwandung 30 keine Leitung gezogen werden, so läßt sich die Ausnehmung 34 durch Einstecken eines Blindsteckteiles verschließen. Das Blindsteckteil kann beispielsweise ein Steckteil gemäß den Figuren 3 und 4 sein, bei dem die Haut 50 nicht aufgetrennt wurde.

Auch wenn die Erfindung lediglich an Hand eines Ausführungsbeispieles beschrieben wurde, erschließen sich für den Fachmann im Lichte der vorstehenden Beschreibung viele verschiedenartige Alternativen, Modifikationen und Varianten, die unter die vorliegende Erfindung fallen. Beispielsweise können die am Steckteil und der Ausnehmung vorgesehenen Führungsmittel abgewandelt werden, indem z. B. die Nut in der Durchtrittsfläche der Ausnehmung und ein umlaufender Steg am Steckteil vorgesehen sind. Ferner kann die Ausnehmung eine von der U-Form abweichende Form aufweisen.

Es kann auch von Vorteil sein, das Steckteil an die Leitung unmittelbar anzuformen, so daß es unverlierbar mit der Leitung verbunden ist.

## Ansprüche

1. Leitungsdurchgang für eine Wandung mit Abschlußkante (32), insbesondere für eine Kabinenheckwandung (30) eines Fahrzeuges (10), welche eine durch eine Heckklappe (24) verschließbare Öffnung aufweist, bei der die Wandung (30) eine zur Abschlußkante (32) hin offene, vorzugsweise U-förmige Ausnehmung (34) aufweist und die Ausnehmung (34) durch ein einfügbares Steckteil (36), welches in seinem mittleren Bereich wenigstens eine Durchtrittsöffnung (38) für wenigstens eine Leitung (40) enthält, verschließbar ist.

2. Leitungsdurchgang nach Anspruch 1, dadurch gekennzeichnet, daß das Steckteil (36) dichtend in die Ausnehmung (34) einfügbar ist.

3. Leitungsdurchgang nach Anspruch 1 oder 2, dadurch gekennzeichnet, daß die Oberfläche des Steckteiles (36) wenigstens auf der Seite, an der das Klappteil (24) an der Wandung (30) zur Anlage kommt, in etwa mit der Oberfläche der Wandung (30) bündig abschließt.

4. Leitungsdurchgang nach einem der Ansprüche 1 bis 3, dadurch gekennzeichnet, daß die Ausnehmung (34) und das Steckteil (36) in ihren einander zugewandten Bereichen Führungsmittel (44, 48) aufweisen, die ein Einschieben des Steckteiles (36) in die Ausnehmung (34) von der Abschlußkante (32) aus ermöglichen.

5. Leitungsdurchgang nach Anspruch 4, dadurch gekennzeichnet, daß die Ausnehmung (34) einen Führungssteg (48) und das Steckteil (36) eine entsprechende Nut (44) aufweisen.

6. Leitungsdurchgang nach einem der Ansprüche 1 bis 5, dadurch gekennzeichnet, daß die Umfangsfläche (42) des Steckteiles (36) keilförmig ausgebildet ist, so daß der mittlere Querschnitt des Steckteiles (36) kleiner ist als sein Querschnitt an der vorderen und hinteren Oberfläche, und daß die Durchtrittsfläche (46) der Ausnehmung (34) in der Kabinenheckwandung (30 entsprechend keilförmig ausgebildet ist.

7. Leitungsdurchgang nach einem der Ansprüche 1 bis 6, dadurch gekennzeichnet, daß der Querschnitt der das Steckteil (36) durchdringenden Durchtrittsöffnung (38) dem Querschnitt der hindurchgeführten Leitungen (40) entspricht.

8. Leitungsdurchgang nach einem der Ansprüche 1 bis 7, dadurch gekennzeichnet, daß die Durchtrittsöffnung (38) durch eine ausschneidbare Haut (50) überspannt ist.

9. Leitungsdurchgang nach einem der Ansprüche 1 bis 8, dadurch gekennzeichnet, daß das Steckteil (36) eine die Durchtrittsöffnung (38) mit seiner Außenkontur verbindende Trennnaht (52) aufweist.

10. Leitungsdurchgang nach einem der Ansprüche 1 bis 9, dadurch gekennzeichnet, daß das Steckteil (36) so ausgebildet ist, daß es bei Entfernen der Leitung (40) an dieser verbleibt.

11. Leitungsdurchgang nach einem der Ansprüche 1 bis 10, dadurch gekennzeichnet, daß das Steckteil (36) durch ein Blindsteckteil ersetzbar ist.

12. Leitungsdurchgang nach einem der Ansprüche 1 bis 11, dadurch gekennzeichnet, daß das Steckteil (36) aus Gummi besteht.

13. Steckteil für einen Leitungsdurchgang nach einem der Ansprüche 1 bis 12.

FIG. 1

FIG. 5

FIG.4

FIG.2

FIG. 3

Europäisches
Patentamt

EUROPÄISCHER RECHERCHENBERICHT

Nummer der Anmeldung

EP 90 12 4952

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-2 240 086 (GEBRÜDER MERTEN) * Seite 7; Figuren * | 1,2,4,5 ,7,10, 12,13 | F 16 L 5/02 H 02 G 3/08 |
| A | | 3,8,11 | |
| | --- | | |
| X | NL-B- 160 711 (BUSCH-JAEGER LÜDENSCHEIDER METALLWERKE AG) * Spalte 2, Zeilen 33-42; Figuren * | 1-4,7, 10,12, 13 | |
| A | | 5 | |
| | --- | | |
| X | NL-C- 44 012 (S. KRAMER) * Seite 1, linke Spalte, Zeilen 22-25; Figuren * | 1-4,7, 10,11, 13 | |
| | --- | | |
| A | FR-A-1 120 707 (REGIE NATIONALE DES USINES RENAULT) * Figur 9 * | 1,9 | |
| | --- | | |
| A | US-A-4 267 618 (J.F. CUSCOVITCH) * Ansprüche * | 1,7 | |
| | ----- | | |

| | | | RECHERCHIERTE SACHGEBIETE (Int. Cl.5) |
|---|---|---|---|
| | | | F 16 L H 02 G H 01 B |

Der vorliegende Recherchenbericht wurde für alle Patentansprüche erstellt

| Recherchenort | Abschlußdatum der Recherche | Prüfer |
|---|---|---|
| DEN HAAG | 06-02-1991 | NEUMANN E. |